# EUROPEAN PATENT SPECIFICATION

(11) **EP 4 094 877 B1**
(45) Date of publication and mention of the grant of the patent: **01.05.2024**
(21) Application number: 21176179.6
(22) Date of filing: 27.05.2021
(51) Int. Cl.: B23K 26/24, B23K 1/00, B23K 1/19, H05K 7/14

(54) **METHOD FOR FORMING A BUSBAR HAVING A CONTACT ELEMENT, A BUSBAR HAVING A CONTACT ELEMENT AND POWER DISTRIBUTION SYSTEM HAVING SUCH A BUSBAR**
VERFAHREN ZUR FORMUNG EINER STROMSCHIENE MIT EINEM KONTAKTELEMENT, STROMSCHIENE MIT EINEM KONTAKTELEMENT UND STROMVERTEILUNGSSYSTEM MIT SOLCH EINER STROMSCHIENE
PROCÉDÉ DE FORMATION D'UNE BARRE OMNIBUS DOTÉE D'UN ÉLÉMENT DE CONTACT, BARRE OMNIBUS DOTÉE D'UN ÉLÉMENT DE CONTACT ET SYSTÈME DE DISTRIBUTION DE PUISSANCE DOTÉ D'UNE TELLE BARRE OMNIBUS

(43) Date of publication of application: 30.11.2022
(73) Proprietor: Rogers BV, 9940 Evergem (BE)
(72) Inventor: Tang, Liang, 9940 Evergem (BE); Shi, Wei, 9940 Evergem (BE); Yang, Jianning, 9940 Evergem (BE); Zhang, Yuqiang, 9940 Evergem (BE)
(74) Representative: Müller Schupfner & Partner Patent- und Rechtsanwaltspartnerschaft mbB

(56) References cited:
- EP-A1- 2 874 205
- EP-A1- 3 654 742
- JP-A- 2015 076 153
- US-A- 5 579 217
- US-A1- 2019 143 726
- "Battery Welding: A Guide to Selecting and Using Joining Technologies", WELDING JOURNAL, AMERICAN WELDING SOCIETY, MIAMI, FL, US, vol. 94, no. 3, 1 March 2015 (2015-03-01), pages 36-39, XP001594203, ISSN: 0043-2296

## Description

The present invention concerns a method for forming a busbar having a contact element, a busbar being connected to a contact element and a power distribution system having such a busbar.

Laminated busbars typically comprise conductive sections of fabricated copper separated by thin dielectric materials, laminated into a unified structure. Examples for laminated busbars can be found in CN 203 504 394 U, CN 104 022 414 A1 or CN 202 474 475 U. Usually a contact element is included in the busbar, in order to connect electrical poles of an electronic component, such as a capacitor, an IGBT and even another connection busbar, directly to different conductive sections, wherein each of the conductive sections is assigned to a type of poles provided by each component. Typically, the components are connected to the connected region by nuts and bolts/pins
Further, it is known, for example from US 5,579,217, to use conductive sections made from aluminum. Thus, a comparable light busbar can be provided. For avoiding corrosion or oxidation of these busbars, the busbar is typically covered by a nickel and/or tin cladding, in particular a nickel and/or tin plating. However, covering the whole busbar with a nickel and/o tin plating is comparable cost intensive.

EP 3 654 742 discloses a method for forming a busbar by creating a bond between a second conductive section and a contact element. The article "Battery Welding: A guide to selecting and using Joining technologies", being published in Welding Journal, American Welding Society, Miami, FL, US, vol. 94, no. 3 on March 1, 2015 between the pages 36- 36 teaches laser welding for join aluminum busbars. US 2019 143726 A1 teaches that elements different from aluminium and aluminium can be jointed by soldering by partially applying an ink made of tin or nickel.

Furthermore, it is necessary for some applications to provide contact elements being made from a material being different from aluminum.

Considering the above, it is an object of the present invention to provide a method for manufacturing a busbar and to provide a busbar that is improved compared to those known in the state of the art, in particular with respect to a cost efficiency of its manufacturing process and/or a durability of the manufactured busbar, especially for busbars, being used in specific applications.

This object is achieved by a method to form a busbar having a contact element according to claim 1, a busbar having a contact element according to claim 14 and a power distribution system having a busbar according to claim 15. Preferred embodiments are incorporated in the dependent claims, the description and the figures.

According to a first aspect of the present invention a method for forming a busbar having a contact element is provided, comprising:
- providing a first conductive section made from aluminum,
- providing a second conductive section made from aluminum, wherein the second conductive section is connected to the contact element, the contact element being made from a material different from aluminum, preferably from copper, and wherein the second conductive section is at least partially covered with nickel and/or tin,
- creating a laser welding bond, in particular a laser welding seam, between the first conductive section and the second conductive section, by laser welding and
- creating a bond between the second conductive section and the contact element, preferably by soldering.

In contrast to the state of the art, it is provided according to the present invention to connect the contact element to the first conductive section via a second conductive section being covered with nickel and/or tin and to perform the connection between the first conductive section and the second conductive section by a laser welding process. It turned out that realizing the connection by laser welding establishes a durable and resistant connection between the first conductive element and the second conductive section, in particular if the first conductive section is formed by a bare aluminum sheet and the second conductive section, being covered with nickel and/or tin, is connected directly to this bare aluminum sheet, representing the first conductive section. In particular, it turned out to be of advance to use a separate second conductive section for connecting the contact element to the first conductive section, since covering the second conductive section by nickel and/or tin can be performed in a simplified way. Moreover, it turned out that it is possible to bond the contact element to the second conductive section, preferably by soldering, when the contact element is not made from aluminum. As a result it is possible to create a light busbar by using aluminum as main component, namely as first conductive section, and simultaneously to provide a contact element being made from a material different from aluminium for adapting the busbar to a specific application.

Especially, it turned out that the connections provide a very good electrical and mechanical connection, although the busbar includes the contact element, the first conductive section and the second conductive section as well as the at least two bonds. As a consequence, it is possible to apply the method for connecting the first conductive section to the second conductive section by means of laser welding, when the contact element on the one hand and the rest of busbar on the other hand are made from different materials, in particular, when the contact element is made from copper. Preferably, only the second conductive section or the second conductive section and the contact element are covered with nickel and/or tin at least partially or completely. The contact element, in particular the copper element made from copper, is bare, i. e. non-plated, or plated with nickel and/or tin. Preferably, at least one contact element is connected or several contact elements are connected to the first conductive section via the second conductive section. For soldering the contact element to the second conductive section SAC305 is used for example.

It is further of advance, that the laser welding seam can be realized in a section, being spaced from the contact element, and therefore simplifies the access of a laser-beam to an interface region between the first conductive section and the second conducive section, the laser welding seam preferably extending at least partially along the interface region between the first and the second section in a finished state of the realized connection. As a consequence, a quality of the realized connection can be improved.

In general, it is advantageously possible to realize the nickel and/or tin cover only for the second conductive section and to avoid a covering of the first conductive section with nickel and/or tin. In other words: the durable and resistant connection realized by the laser welding allows restricting the cover only to the first conductive section and it is no longer necessary to cover the whole busbar. Thus, material, namely nickel and/or tin, can be saved and consequently the costs can be reduced, without effecting the durability of the manufactured busbar. Especially, the second conductive section is smaller than 150 mm x 150 mm, preferably smaller than 120 mm x 120 mm and most preferably smaller than 100 mm x 100 mm.

In particular, the contact element is defined as a section, being intended to make an electrical contact available, in particular an external contact. In other words: the contacts section represents a terminal to provide the current being conducted by the busbar. For example, the contact element is configured to receive a pin or to connect a cable to the busbar to transfer an electrical current from the busbar. Furthermore, the second conductive section is preferably a part of the busbar, in particular the section without the contact element. Essentially, the first conductive section and the second conductive section form together the busbar and preferably the second conductive section continues the general course of the first conductive section in a main extension plane. The contact element can be rigid or flexible.

Preferably, the busbar is either a flat product extending in a main extension plane or is bended as a 3D structure, for example U-shaped or L-shaped. The first conductive section and/or the second conductive section are preferably an aluminum sheet, especially a bare aluminum sheet that mainly defines the main extension plane. For example, the contact element includes a connector element being a bushing for receiving a pin of the electrical component. Preferably, the bushing has an opening for receiving a pin of the electronical component. Thus, for mounting the electronical component the pin can be inserted into the bushing, in particular in the hole of the bushing.

Preferably, the busbar is a flat product extending in a main extension plane. The term "flat" means that a thickness of the busbar, measured in a direction perpendicular to the main extension plane, is at least 10 times, preferably at least 15 times, smaller than the extensions across the busbar in a plane parallel to the main extension plane. For instance, the busbar is laminated and/or covered with an insulation layer. Such busbars are particularly intended for collecting and transferring electrical power. For example, a plurality of capacitors is arranged on top of the busbar and are connected to the busbar for distributing a total power collected from a plurality of capacitors. Such busbars are intended for being used in electrical vehicles, for example. In particular, the thickness of the busbar, measured in a direction perpendicular to the main extension plane, is between 0.5 mm and 6 mm, more preferably between 3 mm and 6 mm and most preferably between 4.5 mm and 5.5 mm. Although the busbar is comparable thick, it is still configured to be bended to adapt its shape for the corresponding application. In particular, the term "flat" concerns a main body of the busbar, for example at least 70 %, preferably at least 80 % and at least 90 % of the busbar extends in a flat manner. In addition to the pure flat regions or sections, the busbar can include sections extending perpendicular or slanted to a main extension plane of the busbar, thereby being U-shaped for example or L-shaped.

Preferably, the second conductive section has a non-symmetrical cross section in the main extensions plane. The non-symmetrical cross section establishes preferably a positive locking with the first conductive section, the positive locking hindering the second conductive section from being rotated about an axis perpendicular to the main extension plane. Especially, the second conductive section is not completely rotationally symmetric. For example, the second conductive section has a star like, a rectangular or an elliptical shape. Preferably, the cross section is non-circular. In particular, the second conductive section is formed such that connecting the second conductive section with the first connection section makes an orientation of the second conductive section necessary. Especially, the first conductive section and the second conductive section establish a key lock principle. Thus, it is possible to connect the first conductive section and the second conductive section prior to realizing the welding seam.

Preferably, the first conductive layer and the second conductive layer are connected by a frictional connection, in particular prior to establishing the welding seam. As a consequence, it is possible to connect the first conductive section and the second conductive section in a firm manner, for example for handling the assembly of the first conductive section and the second conductive section prior to the welding process. As a result, the assembly can be transferred to the welding machine without risking a separation of the first and the second conductive section. Preferably, the first conductive section and the second conductive section establishes a press fit. The same applies for the second conductive section and the contact element.

It is also conceivable that the second conductive section is covered in contact regions with nickel and/or tin, the covered regions contacting the first conduct section and the contact element in an assembled state, while the other regions besides the contact region are substantially free from a covering with nickel. For example only a circumference or its periphery of an outer border of the second conductive section is covered with nickel and/or tin.

According to another embodiment of the present invention, the welding seam along the interface section between the first conductive section and the second conductive section is interrupted or extends without an interruption.

Further, it is provided that the connector element is connected to the second conductive section such that the connector element protrudes from the second conductive section along a direction being perpendicular to the main extension plane. Especially, the connector element has a front side that faces away from the second conductive section and forms at least a part of a connection surface to which the electronical component, such as a capacitor, an IGBT, or a cable is connected. Preferably, a distance between the second conductive section and said front side facing away from the second conductive section is greater than a thickness of the first conductive section, preferably 1.2 to 5 times, more preferably 1.5 and 4 times and most preferably 2 and 3.5 times greater than the thickness of the first conductive section or second conductive section. Said distance and said thickness are measured along the direction perpendicular to the main extension plane. Preferably, the first conductive section and/or the second conductive section is covered with an isolation layer. In particular, it is provided that the connector element is covered by nickel and/or tin to realize a low contact resistance on the connector element of the contact element, in particular on a connector surface of the connector element.

According to a preferred embodiment the first conductive section and/or the second conductive section comprises several metal sheets being stacked above each other along a stacking direction extending perpendicular to the main extension plane. Preferably, the metal sheets, being stacked above each other, are isolated from each other by an isolation layer, being arranged between at least two of the several metal sheets. For example, the metal sheets have a thickness between 0.5 mm and 5 mm, preferably between 0.75 mm and 2 mm and more preferably between 1 mm and 1.5 mm, in particular measured along the stacking direction. In particular, a height of the connector element is at least 2 to 5 times, more preferably 1.5 and 4 times and most preferably 2 and 3.5 times greater than the thickness of the first conductive section, in particular measured along the stacking direction.

Furthermore, the first conductive section and the second conductive section are preferably formed by flat bodies, extending in a main extension plane, and wherein the first conductive section and the second conductive section are arranged in a common plane, being parallel to the main extension plane. In particular, it is provided that the second conductive section continues the general course of the first conductive section in a direction parallel to the main extension plane. Especially, a surface of the first conductive section is flush with a surface of the second conductive section, the surfaces being arranged in the same plane. As a consequence, the second conductive section represents a part of the busbar.

Moreover, it is provided that the second conductive section is smaller than the first conductive section. Preferably, an extension of the first conductive section in a direction parallel to the main extension plane is more than 5 times, preferably more than 10 times and most preferably more than 15 times greater than the extension of the second conductive section, measured in the same direction.

Preferably, the first conductive section and the second conductive section have the same thickness measured in a direction perpendicular to the main extension plane. Alternatively, it is conceivable that the thickness of the first conductive section is at least 5 times, preferably at least 10 times and most preferably at least 15 times greater than the thickness of the second conductive section. Such a comparably thin second conductive section might be easily bended to simplify the access to the contact element in specific applications. It is also conceivable that the thickness of the second conductive section is different from the thickness of the first conductive section.

In particular, the first conductive section is made from bare aluminum, i. e. an aluminium being not covered with nickel and/or tin. Thus, nickel and/or tin can be saved in the manufacturing process, since not the whole busbar, in particular the first conductive layer, is covered with nickel and/or tin. Instead only the second conductive layer forming a part of the busbar is covered with nickel and/or tin. In particular, it is provided that the first conductive layer is connected to the second conductive layer directly. It is obvious for the skilled person that the bare aluminum sheet representing the first conductive section can be covered with another material, for example by the isolation layer, without nickel and/or tin. In particular, the covering with another material does not extend to a region, which is bonded to the second conductive section. It is also conceivable that the first conductive section is partially covered with nickel and/or tin.

Preferably, the second conductive section is covered with nickel and/or tin. Thus, it is possible in an advantageous manner to establish the covering of the nickel and/or tin by a diving process and/or electrochemically. By completely covering the second conductive section, the manufacturing process of covering is simplified. At the same time by using a comparably small second conductive section, it is possible to restrict or limit the part being covered with nickel and/or tin in the finished state of the busbar.

Preferably, it is provided that in addition to the laser welding bond a form-fitting and/or frictional fitting is realized between the first conductive section and the second conductive section, in particular in a direction parallel to the main extension plane and/or in addition to the bond a form-fitting and/or frictional fit-ting is realized between the second conductive section and the contact element, in particular in a direction parallel to the main extension plane. As a consequence, the mechanical strength of the connection between the first conductive section and the second conductive section/between the second conductive section and the contact element is increased in an advantageous manner.

Preferably, the form-fitting is realized by a first curvature, bordering at least partially the first conductive section in a plane parallel to the main extension plane, and a second curvature, bordering at least partially the second conductive section, wherein the first curvature and the second curvature are shaped complementary to each other. The same applies for the connection between the second conductive section and the contact element. In particular, the first curvature and the second curvature interlock with each other to realize and/or to establish the form-fitting connection between the first conductive section and the second conductive section. Preferably, the laser-welding bond or seam is realized along the first and second curvature. Thereby, it is conceivable that the modification of the first or second curvature, intended to realize the form-fitting, might be established in a direction parallel to the main extension plane and/or perpendicular to the main extension plane.

Furthermore, a laser-welding seam, in particular a single laser-welding seam, is generated
- by directing a laser beam on a top surface of the first conductive section or of the busbar, and optionally by directing another laser beam on a bottom surface of a first conductive section of the busbar or
- several laser-welding seems are generated by directing a laser beam on the top surface of the busbar or the first conductive section and by directing another laser beam on a bottom surface of the first conductive section or of the busbar. By treating the interface region between the first conductive section and the second conductive section from both sides, i. e. at the topside and the bottom side of the busbar, it is advantageously possible to increase the welding strengths and therefore the mechanical strengths of the bond between the first conductive section and the second conductive section. In particular, the method includes also an embodiment, which uses only a single laser, wherein the laser beam is split into two different laser beams, wherein one laser beam is directed to the top surface and the other laser beam is directed to the bottom surface of the interface region between the first conductive section and the second conductive section. By directing laser light onto the topside and the bottom side of the busbar or the interface section it is further advantageously possible to accelerate the bonding process, since the laser welding seam is generated simultaneously from both side, namely from the top side and the bottom side.

In particular, it is provided that the busbar has a primary conductive layer and a secondary conductive layer, being stacked above each other. Each of the primary conductive layer and/or the secondary conductive layer, i. e. the first conductive section, is assigned to respective contact elements, i. e. second conductive sections, being bonded to the primary conductive layer and/or the second conductive layer respectively. For forming the busbar, it is provided to stack the first conductive layer and the second conductive layer along a stacking direction above each other, wherein the stacking direction mainly extends perpendicular to the main extension plane. The second conductive layer, being preferably copper sheet, and the first conductive layer are arranged parallel to each other and are in particular spaced from each other by another isolation layer, in particular spaced only by another isolation layer. By reaching through the first conductive layer it is advantageously possible to arrange both the contact element of the primary conductive layer, for example a primary bushing, and the contact element of the secondary conductive layer, for example a secondary bushing, at the same side, in particular at a top side of the busbar, wherein the top side faces to the electrical component in the mounted state. Thus, both poles of a capacitors arranged on the top side of the busbar can connect respectively the first conductive layer and the second conductive layer.

Preferably, the contact element includes an opening, in particular for inserting a corresponding pin or terminal. Thus, the opening allows connecting the contact element and therefore the busbar to an external component, such as a terminal of a capacitor, IGBT and/or a cable that transfers the electric current from the busbar to a device, which needs the current. Especially, capacitors are connected with the busbar by terminals, using bolts and nuts, for example. Preferably, the laser-welding bond is spaced from the contact element. As a consequence, the laser process is simplified, since the access to the interface section between the first conductive section and the second conductive section is improved.

In particular, the second conductive section is inserted into a recess of the first conductive section. As a consequence, a contact element can be incorporated inside or within the first conductive section or, in other words, in the middle of the busbar. For example, the recess represents a hole that reaches through the whole first conductive section. Alternatively, it is also thinkable that the recess has a stepped shape and the second conductive section is inserted into the step-shaped recess formed in the first conductive section. It is also conceivable that the contact element is inserter into a recess of the second conductive section.

Preferably, the second conductive layer is arranged adjacent to the first conductive section. As a consequence, it is possible to realize a terminal at the outside or at the outer edge of the first conductive section by connecting such a second conductive section to the outer edge or outer rim of the first conductive section.

In particular, it is provided that a nickel plating and/or a tin plating is provided to cover the second conductive section is performed, wherein the nickel plating and/or the tin plating has a thickness between 1 µm and 50 µm, preferably between 2 and 25 µm and more preferably between 5 and 15 µm. It turned out that for said thicknesses an effective corrosion and oxidation protection can be realized, without spending too much nickel and/or tin for realizing said protection.

Preferably, a laser power is adjusted for defining a length of the laser welding seam. Thus, it is advantageously possible to control the strength and dimensions of the generated laser welding seam. Alternatively or additionally, it is conceivable to adjust a treatment duration, during which the laser welding seam is generated, for adapting the dimensions and/or the form of the generated laser welding seam.

Another aspect of the present invention concerns a busbar having a contact element, in particular realized by a method according to the present invention, comprising
- a first conductive section made from aluminum,
- a second conductive section made from aluminum, wherein the second conductive section is connected to the contact element and wherein the second conductive section is at least partially covered with nickel and/or tin, and
- a laser welding bond connecting the first conductive section and the second conductive section and
- bond, in particular a soldering bond, between the second conductive section and the contact element. All specifics being mentioned in the context of method according to the present invention apply analogously to the busbar being connected to the contact element and therefore having the contact element.

Another aspect of the present invention concerns a power distribution system having a busbar according to the present invention. All specifics and benefits being mentioned above apply analogously to the subject matter of the power distribution system and vice versa. An example for such a power distribution system is a battery package or components being used in electrical vehicles, hybrid vehicles, rail vehicles and for generating or handling renewable energy.

Wherever not already described explicitly but covered by the appended claims, individual embodiments or their individual aspects and features can be combined or exchanged with one another without limiting or widening the scope of the described invention, whenever such a combination or exchange is meaningful and in the sense of this invention. Advantages which are described with respect to one embodiment of the present invention are, wherever applicable, also advantageous of other embodiments of the present invention.

In the drawings:
- **Fig. 1**: schematically shows a connection between a busbar and a contact element according to a first preferred embodiment of the present invention,
- **Fig. 2**: schematically shows a connection between a busbar and a contact element according to a second preferred embodiment of the present invention,
- **Fig. 3**: schematically shows a connection between a busbar and a contact element according to a first preferred embodiment of the present invention n,
- **Fig. 4**: schematically shows a connection between a busbar and a contact element according to a first preferred embodiment of the present invention,
- **Fig. 5**: schematically shows a connection between a busbar and a contact element according to a first preferred embodiment of the present invention,
- **Fig. 6**: schematically shows a connection between a busbar and a contact element according to a first preferred embodiment of the present invention,

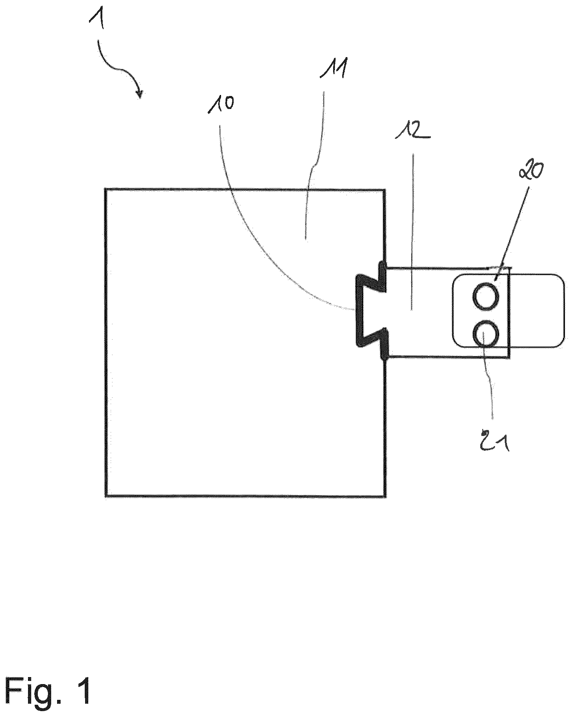

In **Fig. 1** a busbar 1, being connected to a contact element 20 according to a first exemplary embodiment of the present invention is illustrated. Preferably, such busbars 1 are used to collect and to transfer comparably high currents, preferably in a power distribution system. For example, such power distribution system and/or the connection of the busbar is used in an electro-motoric driven vehicle, electric locomotive or power transmission system. The contact element 20 is intended to allow a contact to an external component, in particular, to transfer a current from the busbar 1 to a cable. Preferably, the contact element 20 forms a terminal. For example, the contact element 20 includes at least one opening 21 for connection terminals (not illustrated).

To provide a comparably light busbar 1 it is preferably provided to use aluminium as material for the busbar 1. However, using aluminium as material for the busbar 1 makes a corrosion protection necessary to avoid a corrosion of the busbar 1. In particular, it is known to use nickel and/or tin for covering the busbar 1 for providing the desired corrosion protection. However, covering the whole busbar 1 with nickel and/or tin, in particular, performing a nickel and/or tin plating of the aluminium busbar 1 is a material- and cost-intensive way to create the corrosion protection of the busbar 1.

Especially, it turned out that it is sufficient for the corrosion protection, if the covering of the busbar 1 with nickel and/or tin is established in the near of the contact element 20 and/or in the contact element 20, since this region is receptive for corrosion. Therefore, it is reasonable to create or to establish the covering only partially at the busbar 1, in particular in a region being closed or next to the contact element 20 and/or in the contact element 20. However, covering the busbar 1 only partially with nickel and/or tin leads to challenges in manufacturing, which has to be overcome. It turned out that it is an advantageous way to realize in a simple and effective manner the partial covering of the bus bar with nickel and/or tin by using a first conductive section 11 and a second conductive section 12, the second conductive section 12 including the contact element 20 and/or is connected to the contact zone 20. Thereby, the second conductive section 12 forms a part of the busbar 1 in a finished state of the connection between the contact element 20 and the busbar 1. In particular, it is provided to use a flat body, mainly extending along a main extension plane HSE as a second conductive element 12 in order to continue the general cause of the first conductive layer 11 for forming a flat or laminated busbar 1. Furthermore, it turned out to be beneficial to use a laser-welding process to perform a bonding and/or to establish a connection between the first conductive section 11 and the second conductive section 12. In the embodiment illustrated in figure 1, the second conductive section 12 forms a lug protruding from an outer edge of the first conductive section 11. It is also conceivable that the second conductive section 12 is at least partially inserted into a recess being formed at the outer edge of the first conductive section 11 of the busbar 1. As a consequence, a contact surface, i.e. an interface section, between the first conductive section 11 and the second conductive section 12 is increased to strengthen the connection or bond between the first conductive section 11 and the second conductive section 12.

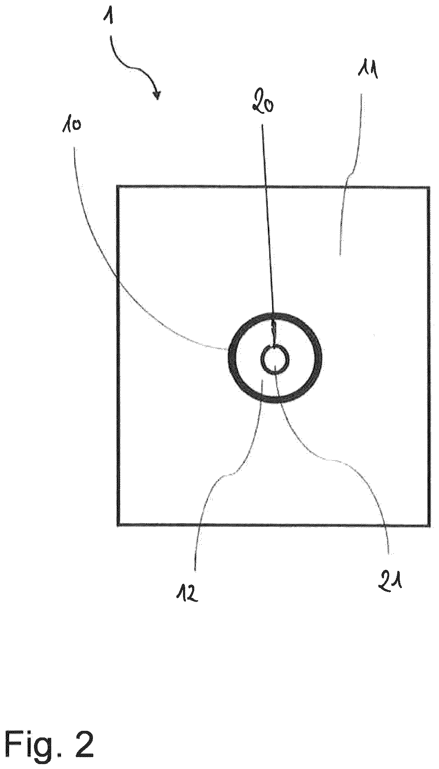

In **Fig. 2** a busbar 1 connected to a contact element 20 is illustrated according to a second exemplary embodiment of the present invention. In general, the embodiment illustrated in figure 2 differs from the embodiment illustrated in figure 1 by using a form-fitting interaction between the first conductive section 11 and the second conductive section 12 in addition to the bond realized by the laser welding seam 10. For establishing the form-fitting connection between the first conductive section 11 and the second conductive section 12, in particular in a direction perpendicular to the outer edge of the first conductive section 11 and parallel to the main extension plane HSE, the first conductive section 11 has a first contour and the second conductive section 12 has a second contour, the first conductive contour and the second contour having a complementary shape, in order to be connected with each other in a form-fitting manner, in particular in a direction parallel to the main extension plane HSE.

Preferably, the first conductive section 11 and second conductive section 12 are connected by a dovetail-joint. As a consequence, the mechanical strength and connection between the first conductive section 11 and the second conductive section 12 is improved.

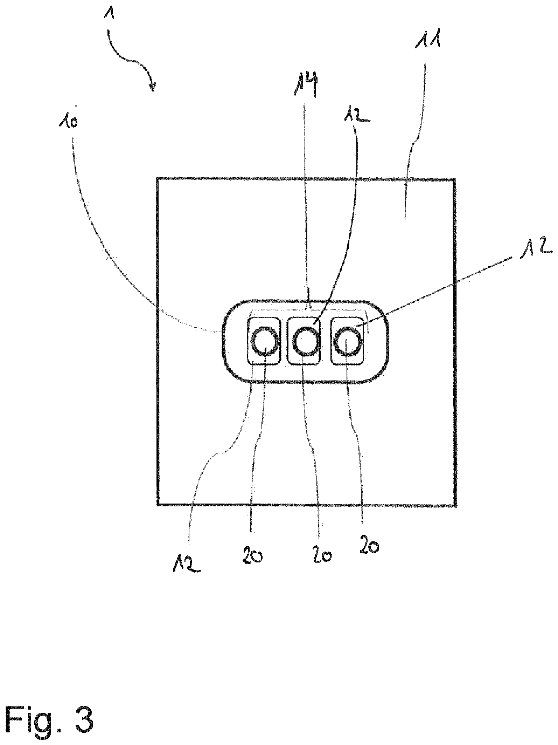

In **Fig. 3** a busbar 1 being connected to a contact element 20 is illustrated according to a third preferred embodiment of the present invention. The embodiment illustrated in figure 3 differs from the embodiment illustrated in the figures 1 and 2 mainly by the arrangement of the second conductive section 12. While in the embodiments illustrated in the figures 1 and 2, the second conductive section 12 being located adjacent to the first conductive section 11, the second conductive section 12 in the embodiment illustrated in figure 3 is located inside of the first conductive section 11. In particular, the second conductive section 12 is inserted into a corresponding recess being formed in the first conductive section 11. For example, the first conductive section 11 has a round recess or hole, which allows inserting a correspondingly shaped second conductive section 12 into the recess. In particular, it is provided for all embodiments, in particular those, which are disclosed or illustrated in the figures 1 to 3 such that the location of the welding seam 10 is spaced from the contact element 20, preferably more than 1 mm, more preferably more than 10 mm and most preferably more than 100 mm. This simplifies the manufacturing process, because the region, which has to be treated by the laser-light for forming the laser-welding bond or seam 10 has an easier access to an interface section between the first conductive section 11 and the second conductive section 12, in particular, compared to a situation, in which the contact element 20 is directly connected to the busbar 1, i. e the first conductive section 11. This is another benefit of using the second conductive section 12 as an intermediate element between the first conductive section 12, i. e. the main part of the busbar 1, and the contact element 20.

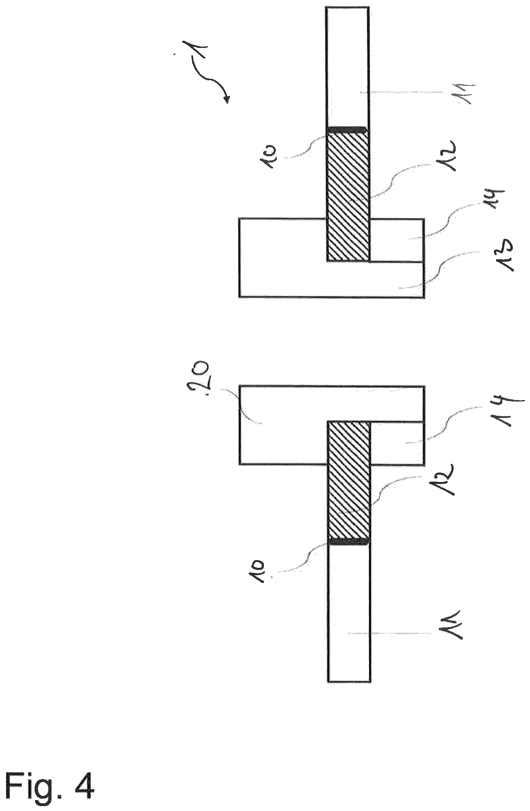

In **Fig. 4****,** a busbar 1 connected to the contact element 20 is illustrated according to a fourth preferred embodiment. The embodiment illustrated in figure 4 differs from the embodiment illustrated in figure 3 mainly by the shape and design of the contact element 20 and/or the second conductive section 12. In particular, it is provided that the contact element 20 in figure 4 has three openings 21 being located in a row. As a consequence, the contact element 20 is no longer formed circular or round and instead has an elongated shape, in particular along a direction being defined by the row of the openings 21.

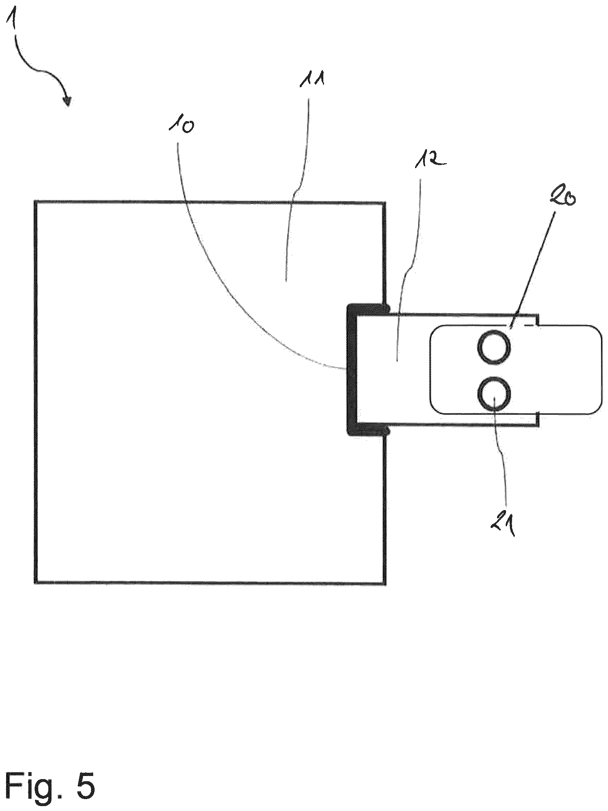

In **Fig. 5** a busbar 1 being connected to a contact element 20 is illustrated according to a fifth exemplary embodiment of the present invention. In particular, the embodiment illustrated in figure 5 refers to an embodiment having a connector element 13, 14, which establishes the contact element 20 being connected to the busbar 1. In particular, the contact element 20 is formed as a bushing, i. e. as a cylindrical shaped body that protrudes from the busbar 1 in a direction being perpendicular to the main extension plane HSE of the busbar 1. Such a bushing or cylindrical shaped connector element 13, 14 has an opening 21 for receiving a pin, for example a pin of a capacitor, which is connected to the busbar 1. As illustrated in figure 5, the bushing or the cylindrically shaped body might have a first part 13 and a second part 14, wherein the first part 13 reaches through a hole or recess inside the second conductive section 12 and in particular reaches through this hole or recess for being connected with the second part 14 in order to fix the bushing or the cylindrical shaped connector element 13, 14 to the busbar 1 in a form-fitting way, preferably in a direction being perpendicular to the main extension plane HSE. Preferably, the bushing is connected to the second conductive layer 12 also by a laser-welding or they, i. e. the second conductive section and the connector element, form a single or monolithic body. It is also conceivable that the bushing is made from aluminium and/or is covered with nickel and/or tin.

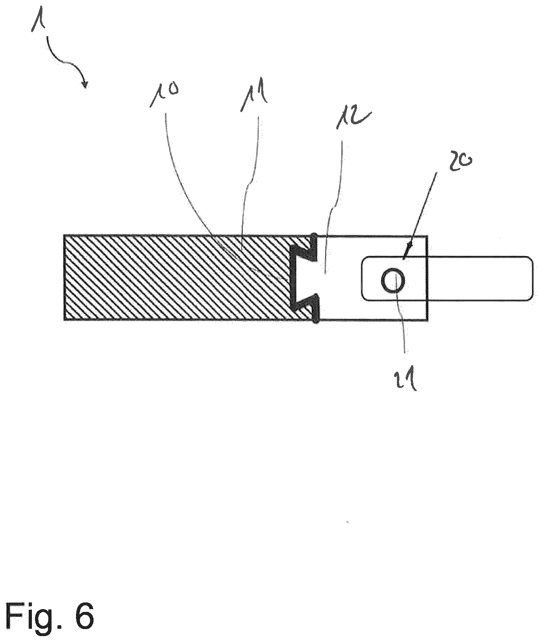

**Fig. 6** shows a connection between a busbar 1 and a contact element 20 according to a sixth preferred embodiment of the present invention. In particular, it is provided that this embodiment refers to a busbar 1 has a stripe-like shape. In particular, it is provided that the first conductive section 11 and the second conductive section 12 have the same width measured in a direction of a general course of the interface section between the first conductive section 11 and the second conductive section or mainly parallel to the direction along which the laser welding seams 10 extends. The shape of the first contour of the first conductive section 11 and the second contour of the second conductive section 12 corresponds to the one, which has been discussed in figure 2.

### Reference numbers:

- 1: busbar
- 10: seam
- 11: first conductive section
- 12: second conductive section
- 13: first part
- 14: second part
- 20: contact element
- 21: opening

## Claims

1. A method for forming a busbar (1) having a contact element (20) comprising:
- providing a first conductive section (11) made from aluminum,
- providing a second conductive section (12) made from aluminum, wherein the second conductive section (12) is connected to the contact element (20), the contact element (20) being made from a material different from aluminum, preferably from copper, and wherein the second conductive section (12) is at least partially covered with nickel and/or tin, **characterized in that** further comprising
- creating a laser welding bond, in particular a laser welding seam (10), between the first conductive section (11) and the second conductive section (12), by laser welding and **characterized by** :
- creating a bond between the second conductive section and the contact element, preferably by soldering.

2. The method according to claim 1, wherein the first conductive section (11) and the second conductive section (12) are formed by flat bodies, extending in a main extension plane, and wherein the first conductive section (11) and the second conductive section (12) are arranged in a common plane, being parallel to the main extension plane.

3. The method according to claim 1, wherein the second conductive section (12) has a non-symmetrical, in particular a non-circular, cross section in the main extension plane.

4. The method according to one of the preceding claims, wherein the first conductive section (11) is made from bare aluminum.

5. The method according to one of the preceding claims, wherein the second conductive section (12) is fully covered with nickel and/or tin.

6. The method according to one of the preceding claims, wherein in addition to the laser welding bond a form-fitting and/or frictional fitting is realized between the first conductive section (11) and the second conductive section (12), in particular in a direction parallel to the main extension plane (HSE) and/or in addition to the bond a form-fitting and/or frictional fitting is realized between the second conductive section (12) and the contact element, in particular in a direction parallel to the main extension plane (HSE).

7. The method according to one of the preceding claims, wherein the second conductive section and the contact element are assembled and/or connected to each other before establishing the laser welding seam.

8. The method according to one of the preceding claims, wherein
- a laser welding seam (10), in particular a single laser welding seam (10), is generated by directing a laser beam on a top surface of the first conductive section (11) and optionally by directing another laser beam on a bottom surface of the first conductive section (12) or
- several laser welding seams (10) are generated by directing a laser beam on the top surface of the first conductive section (11) and by directing another laser beam on a bottom surface of the first conductive section (11).

9. The method according to one of the preceding claims, wherein the contact element (20) includes an opening (21), in particular for inserting a corresponding terminal.

10. The method according to one of the preceding claims, wherein the laser welding bond (10) is spaced from the contact element (20).

11. The method according to one of the preceding claims, wherein the second conductive section (12) is inserted into a recess of the first conductive section (11).

12. The method according to one or the preceding claims, wherein the second conductive (12) layer is arranged adjacent to the first conductive section (11).

13. The method according to one of the preceding claims, wherein a nickel plating and/or a tin plating is provided to cover the second conductive section (12) , wherein the nickel plating and/or the tin plating has a thickness between 1 µm and 50 µm, preferably between 2 and 25 µm and more preferably between 5 and 15 µm.

14. A busbar in particular realized by a method according to one of the preceding claims, comprising
- a first conductive section (11) made from aluminum,
- a second conductive section (12) made from aluminum, wherein the second conductive section (12) is at least partially covered with nickel and/or tin, and
- a laser welding bond (10) connecting the first conductive section (11) and the second conductive section (12) and **characterized by** a contact element (20) being made from a material different from aluminium, and a bond, in particular a soldering bond, between the second conductive section (12) and the contact element.

15. A power distribution system having a busbar (1) according to claim 14.

## Patentansprüche

1. Verfahren zur Herstellung einer Stromsammelschiene (1) mit einem Kontaktelement (20), umfassend:
- Bereitstellen eines ersten leitenden Abschnitts (11) aus Aluminium,
- Bereitstellen eines zweiten leitenden Abschnitts (12) aus Aluminium, wobei der zweite leitende Abschnitt (12) mit dem Kontaktelement (20) verbunden ist, wobei das Kontaktelement (20) aus einem anderen Material als Aluminium, vorzugsweise aus Kupfer, hergestellt ist und wobei der zweite leitende Abschnitt (12) zumindest teilweise mit Nickel und/oder Zinn bedeckt ist, **dadurch gekennzeichnet, dass** es ferner Folgendes aufweist
- Erzeugen einer Laserschweißverbindung, insbesondere einer Laserschweißnaht (10), zwischen dem ersten leitenden Abschnitt (11) und dem zweiten leitenden Abschnitt (12) durch Laserschweißen und **gekennzeichnet durch**:
- Erzeugen einer Verbindung zwischen dem zweiten leitenden Abschnitt und dem Kontaktelement, vorzugsweise durch Löten.

2. Verfahren nach Anspruch 1, wobei der erste leitende Abschnitt (11) und der zweite leitende Abschnitt (12) durch flache Körper gebildet werden, die sich in einer Haupterstreckungsebene erstrecken, und wobei der erste leitende Abschnitt (11) und der zweite leitende Abschnitt (12) in einer gemeinsamen Ebene angeordnet sind, die parallel zu der Haupterstreckungsebene verläuft.

3. Verfahren nach Anspruch 1, wobei der zweite leitende Abschnitt (12) in der Haupterstreckungsebene einen nicht symmetrischen, insbesondere einen nicht kreisförmigen, Querschnitt aufweist.

4. Verfahren nach einem der vorhergehenden Ansprüche, wobei der erste leitende Abschnitt (11) aus reinem Aluminium hergestellt ist.

5. Verfahren nach einem der vorhergehenden Ansprüche, wobei der zweite leitende Abschnitt (12) vollständig mit Nickel und/oder Zinn bedeckt ist.

6. Verfahren nach einem der vorhergehenden Ansprüche, wobei zusätzlich zu der Laserschweißverbindung ein Formschluss und/oder Reibschluss zwischen dem ersten leitenden Abschnitt (11) und dem zweiten leitenden Abschnitt (12), insbesondere in einer Richtung parallel zu der Haupterstreckungsebene (HSE), und/oder zusätzlich zu der Verbindung ein Formschluss und/oder Reibschluss zwischen dem zweiten leitenden Abschnitt (12) und dem Kontaktelement, insbesondere in einer Richtung parallel zu der Haupterstreckungsebene (HSE), realisiert wird.

7. Verfahren nach einem der vorhergehenden Ansprüche, wobei der zweite leitende Abschnitt und das Kontaktelement vor dem Herstellen der Laserschweißnaht zusammengesetzt und/oder miteinander verbunden werden.

8. Verfahren nach einem der vorhergehenden Ansprüche, wobei
- eine Laserschweißnaht (10), insbesondere eine einzelne Laserschweißnaht (10), durch Richten eines Laserstrahls auf eine Oberseite des ersten leitenden Abschnitts (11) und optional durch Richten eines weiteren Laserstrahls auf eine Unterseite des ersten leitenden Abschnitts (12) erzeugt wird oder
- mehrere Laserschweißnähte (10) durch Richten eines Laserstrahls auf die Oberseite des ersten leitenden Abschnitts (11) und durch Richten eines weiteren Laserstrahls auf eine Unterseite des ersten leitenden Abschnitts (11) erzeugt werden.

9. Verfahren nach einem der vorhergehenden Ansprüche, wobei das Kontaktelement (20) eine Öffnung (21), insbesondere zum Einsetzen einer entsprechenden Anschlussklemme, aufweist.

10. Verfahren nach einem der vorhergehenden Ansprüche, wobei die Laserschweißverbindung (10) von dem Kontaktelement (20) beabstandet ist.

11. Verfahren nach einem der vorhergehenden Ansprüche, wobei der zweite leitende Abschnitt (12) in eine Ausnehmung des ersten leitenden Abschnitts (11) eingesetzt wird.

12. Verfahren nach einem oder den vorhergehenden Ansprüchen, wobei die zweite leitende (12) Schicht neben dem ersten leitenden Abschnitt (11) angeordnet ist.

13. Verfahren nach einem der vorhergehenden Ansprüche, wobei eine Vernickelung und/oder Verzinnung vorgesehen ist, um den zweiten leitenden Abschnitt (12) zu bedecken, wobei die Vernickelung und/oder Verzinnung eine Dicke zwischen 1 µm und 50 µm, bevorzugt zwischen 2 und 25 µm und besonders bevorzugt zwischen 5 und 15 µm aufweist.

14. Stromsammelschiene, insbesondere realisiert durch ein Verfahren nach einem der vorhergehenden Ansprüche, umfassend
- einen ersten leitenden Abschnitt (11) aus Aluminium,
- einen zweiten leitenden Abschnitt (12) aus Aluminium, wobei der zweite leitende Abschnitt (12) zumindest teilweise mit Nickel und/oder Zinn beschichtet ist, und
- eine Laserschweißverbindung (10), die den ersten leitenden Abschnitt (11) und den zweiten leitenden Abschnitt (12) verbindet und **gekennzeichnet ist durch** ein Kontaktelement aus einem anderen Material als Aluminium, und eine
- Verbindung, insbesondere eine Lötverbindung, zwischen dem zweiten leitenden Abschnitt (12) und dem Kontaktelement.

15. Stromverteilungssystem mit einer Stromsammelschiene (1) nach Anspruch 14.

## Revendications

1. Procédé de fabrication d'une barre omnibus (1) comprenant un élément de contact (20), consistant à :
- fournir une première portion conductrice (11) réalisée en aluminium,
- fournir une deuxième portion conductrice (12) réalisée en aluminium,
la deuxième portion conductrice (12) étant connectée à l'élément de contact (20), l'élément de contact (20) étant réalisé en un matériau différent de l'aluminium, de préférence en cuivre, et la deuxième portion conductrice (12) étant au moins partiellement recouverte de nickel et/ou d'étain,
**caractérisé en ce qu'**il consiste en outre à
- créer une liaison par soudage laser, en particulier un cordon de soudure laser (10), entre la première portion conductrice (11) et la deuxième portion conductrice (12), par soudage laser,
et **caractérisé par**
- la création d'une liaison entre la deuxième portion conductrice et l'élément de contact, de préférence par brasage.

2. Procédé selon la revendication 1,
dans lequel la première portion conductrice (11) et la deuxième portion conductrice (12) sont formées par des corps plats, s'étendant dans un plan d'extension principale, et
la première portion conductrice (11) et la deuxième portion conductrice (12) sont disposées dans un plan commun parallèle au plan d'extension principale.

3. Procédé selon la revendication 1,
dans lequel la deuxième portion conductrice (12) présente une section transversale non symétrique, en particulier non circulaire, dans le plan d'extension principale.

4. Procédé selon l'une des revendications précédentes,
dans lequel la première portion conductrice (11) est réalisée en aluminium nu.

5. Procédé selon l'une des revendications précédentes,
dans lequel la deuxième portion conductrice (12) est entièrement recouverte de nickel et/ou d'étain.

6. Procédé selon l'une des revendications précédentes,
dans lequel, en supplément à la liaison par soudage laser, une liaison par complémentarité de forme et/ou une liaison par friction est réalisée entre la première portion conductrice (11) et la deuxième portion conductrice (12), en particulier dans une direction parallèle au plan d'extension principale (HSE), et/ou, en supplément à ladite liaison, une liaison par complémentarité de forme et/ou une liaison par friction est réalisée entre la deuxième portion conductrice (12) et l'élément de contact, en particulier dans une direction parallèle au plan d'extension principale (HSE).

7. Procédé selon l'une des revendications précédentes,
dans lequel la deuxième portion conductrice et l'élément de contact sont assemblés et/ou connectés l'un à l'autre avant l'établissement du cordon de soudure laser.

8. Procédé selon l'une des revendications précédentes,
dans lequel
- un cordon de soudure laser (10), en particulier un cordon de soudure laser unique (10), est généré en dirigeant un faisceau laser sur une surface supérieure de la première portion conductrice (11) et, le cas échéant, en dirigeant un autre faisceau laser sur une surface inférieure de la première portion conductrice (12), ou
- plusieurs cordons de soudure laser (10) sont générés en dirigeant un faisceau laser sur la surface supérieure de la première portion conductrice (11) et en dirigeant un autre faisceau laser sur la surface inférieure de la première portion conductrice (11).

9. Procédé selon l'une des revendications précédentes,
dans lequel l'élément de contact (20) présente une ouverture (21), en particulier pour l'insertion d'un terminal correspondant.

10. Procédé selon l'une des revendications précédentes,
dans lequel la liaison par soudage laser (10) est espacée de l'élément de contact (20).

11. Procédé selon l'une des revendications précédentes,
dans lequel la deuxième portion conductrice (12) est insérée dans une cavité de la première portion conductrice (11).

12. Procédé selon l'une des revendications précédentes,
dans lequel la deuxième couche conductrice (12) est disposée de manière adjacente à la première portion conductrice (11).

13. Procédé selon l'une des revendications précédentes,
dans lequel un placage de nickel et/ou un placage d'étain est prévu pour recouvrir la deuxième portion conductrice (12), le placage de nickel et/ou le placage d'étain ayant une épaisseur comprise entre 1 µm et 50 µm, de préférence entre 2 et 25 µm et de manière particulièrement préférée entre 5 et 15 µm.

14. Barre omnibus, en particulier réalisée par un procédé selon l'une des revendications précédentes, comprenant
- une première portion conductrice (11) réalisée en aluminium,
- une deuxième portion conductrice (12) réalisée en aluminium,
la deuxième portion conductrice (12) étant au moins partiellement recouverte de nickel et/ou d'étain, et
- une liaison par soudage laser (10) reliant la première portion conductrice (11) et la deuxième portion conductrice (12),
**caractérisée par** un élément de contact (20) réalisé en un matériau différent de l'aluminium, et
- une liaison, en particulier une liaison brasée, entre la deuxième portion conductrice (12) et l'élément de contact.

15. Système de distribution de puissance comprenant une barre omnibus (1) selon la revendication 14.
